# EUROPÄISCHE PATENTANMELDUNG

(11) **EP 0 620 963 A1**
(43) Veröffentlichungstag der Anmeldung: **26.10.1994**
(21) Anmeldenummer: 94105001.5
(22) Anmeldetag: 30.03.1994
(51) Int. Cl.: A01C 7/08, B65G 53/60

(54) **Saatgutfördervorrichtung**

(30) Priorität: 20.04.1993 US 49890
(71) Anmelder: DEERE & COMPANY, Moline, Illinois 61265 (US)
(72) Erfinder: Snipes, Terry Lee, East Moline, Illinois 61244 (US); Schick, Jeffrey C., Davenport, Iowa 52807 (US); Miller, Everett T., Carbon Cliff, Illinois 61239 (US); Green, Lawrence D., Bettendorf, Iowa 52722 (US)
(74) Vertreter: Feldmann, Bernhard

(57) **Zusammenfassung**

Eine Saatgutfördervorrichtung, in der mit der Hilfe eines Druckluftstroms Saatgut aus einem Behälter (10) zu einem Saatgutzumeßgerät (22) gefördert wird, enthält ein Rohr (26), das abgabeseitig mehrfach gebogen und zwischen den Bögen (34, 46, 50) mit geraden Abschnitten (42, 44, 48) versehen ist, wobei auf der äußeren Kurvenfläche (36) des ersten Bogens (34) ein Sieb (40) für den Luftaustritt angeordnet ist.

## Beschreibung

Die Erfindung betrifft eine Saatgutfördervorrichtung mit einem Rohr zum Führen von Druckluft und von dieser getragenem Saatgut von einem Behälter zu einem Saatgutzumeßgerät und mit einem Sieb zum Trennen des Saatguts von der Druckluft.

Die US-A-5,156,102 offenbart eine Sämaschine mit einem Saatgutbehälter, aus dem Saatgut mittels eines Druckluftförderers einer Saatgutdosiereinheit zugeführt und nach dieser in eine Furche abgegeben wird. Zwischen dem Saatgutbehälter und der Saatgutdosiereinheit erstreckt sich ein waagrecht angeordnetes Rohr, das nach zweifacher gleichsinniger Umlenkung in eine Vorkammer der Saatgutdosiereinheit mündet. Beim Eintritt des Saatguts in die Vorkammer trifft der Luftstrom auf ein geschlitztes Prallblech auf, durch das der Luftstrom entweicht, während das Saatgut an ihm entlang gleitet und der Saatgutdosiereinheit zufällt. Das Prallblech, die Vorkammer und die Saatgutdosiereinheit sind mehreren Säeinheiten gemeinsam.

Diese Sämaschine ist insofern nachteilig, als das direkte Auftreffen des Saatguts auf das Prallblech mit hoher Geschwindigkeit zu Saatgutbruch und einer relativ hohen Lärmentwicklung führt. Außerdem ist bei einer seitlichen Neigung der Sämaschine nicht an jeder Saatgutdosiereinheit ein ausreichender Saatgutvorrat gewährleistet.

Aus der US-A-3,964,639 geht ebenfalls eine Sämaschine mit Druckluftförderung hervor, bei der nahe dem abgabeseitigen Ende einer Leitung zu dem Säschar ein Sieb vorgesehen ist, durch das der Luftstrom entweichen kann. Mit diesem Sieb soll sichergestellt werden, daß auch bei einem verstopften Säschar noch ein ausreichender Luftstrom fließt und somit Saatgut weiter befördert wird.

Die der Erfindung zugrunde liegende Aufgabe wird darin gesehen, eine Saatgutfördervorrichtung vorzuschlagen, die das Saatgut in einem Druckluftstrom fördert, dieses bei der Abgabe aber nicht beschädigt und eine geringe Lärmentwicklung verursacht.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird das Saatgut unmittelbar vor dem abgabeseitigen Ende durch die Kurvenführung des Rohrs abgebremst und infolgedessen nicht beschädigt; die Aufprallenergie auf das Sieb, das dem Prallblech aus dem Stand der Technik gleichkommt, ist so weit reduziert, daß auch nur eine geringe Lärmentwicklung besteht. Das Sieb läßt die fördernde Druckluft entweichen, und das Saatgut kann stromabwärts des Siebs alleine aufgrund der Schwerkraft dem Saatgutzumeßgerät zufallen. Dadurch, daß das Sieb auf der Außenkurve des Bogens angeordnet ist, kann sich dort auch kein Saatgut ansammeln, und ein Luftaustritt ist somit stets gewährleistet. Der letzte oder vorletzte Abschnitt vor dem Saatgutzumeßgerät dient zugleich als Reservoir für Saatgut.

Wenn sich das speziell gebogene oder zusammengesetzte Rohr in einem Nebenbehälter befindet, kann die dort austretende Luft, insbesondere dann, wenn sie etwas erwärmt ist, eine Kondensationsbildung in dem Nebenbehälter verhindern. Zudem bietet ein Nebenbehälter ein ausreichendes Vorratsvolumen für Saatgut, so daß auch bei Hangarbeit die Saatgutzumeßgeräte ausreichend Saatgut erhalten.

Die Neigung des Rohrs im abgabeseitigen Bereich gewährleistet auch dann eine Saatgutförderung, wenn der Luftstrom in seiner Stärke nachläßt.

Die Anordnung des Auslasses des Rohrs vertikal fluchtend zu dem Saatgutmitnehmer des Saatgutzumeßgeräts gewährleistet eine sichere Saatgutaufnahme und ein Anblasen des Saatgutzumeßgeräts mit evtl. warmer Luft, so daß auch in dessen Bereich eine Kondensatbildung unterbleibt; mittelbar führt diese Ausbildung auch zu der Möglichkeit, den Saatgutmitnehmer relativ klein auszulegen.

Eine Saatgutfördervorrichtung mit einer optimalen Fördercharakteristik kennzeichnet sich dadurch aus, daß das Rohr nach einem Eintritt in den Nebenbehälter schräg nach unten bis zu einem das Sieb aufnehmenden Bogen verläuft, sich danach über einen vertikalen, geraden Abschnitt zu einem zweiten entgegengesetzt gerichteten Bogen fortsetzt und nach einem weiteren geraden und nach unten geneigten Abschnitt in einem vertikal auslaufenden Bogen an dem Saatgutzumeßgerät endet.

In der Zeichnung ist ein nachfolgend näher beschriebenes Ausführungsbeispiel der Erfindung dargestellt. Es zeigt:
- Fig. 1: eine Sämaschine mit einem Behälter und einem Nebenbehälter in schematischer Darstellung,
- Fig. 2: den Nebenbehälter mit einem Rohr in Seitenansicht und

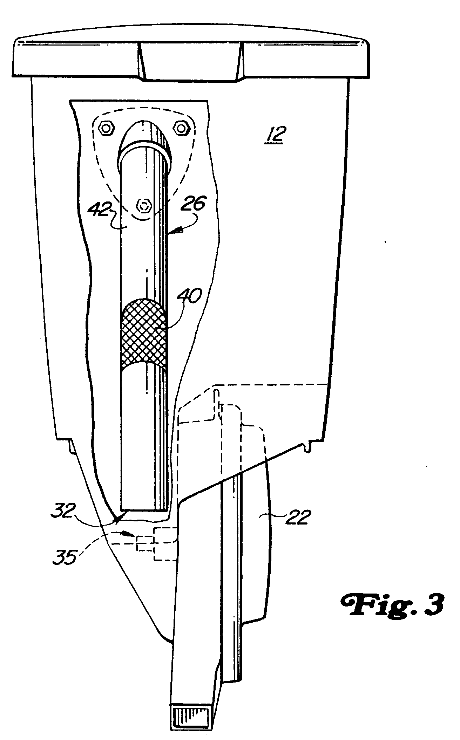

- Fig. 3: den Nebenbehälter mit dem Rohr in Vorderansicht.

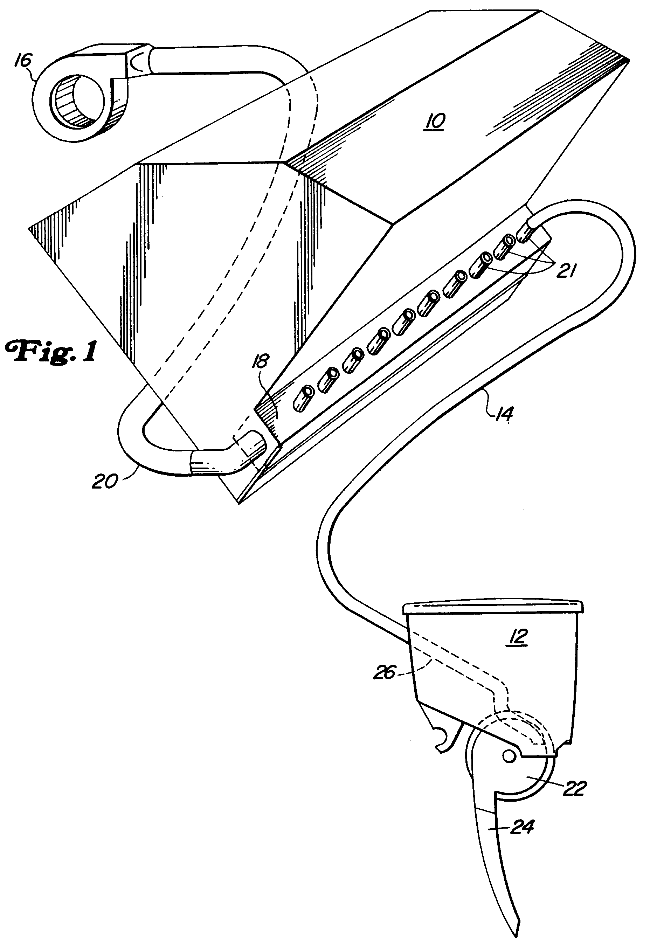

Figur 1 zeigt eine landwirtschaftliche Sämaschine, in der die vorliegende Erfindung verwendet wird. Saatgut ist in einem Behälter 10 gespeichert und wird mittels vorzugsweise mehreren, jedenfalls mindestens einem Schlauch 14 einem oder mehreren Nebenbehältern 12 zugeführt. Die Funktion dieser Sämaschine ist ausführlich in der US-A-5,161,473 beschrieben, deren Inhalt hiermit in diese Patentanmeldung einbezogen wird.

Ein einen konstanten Druck lieferndes Gebläse 16 speist einen Verteiler 18 mit Druckluft mittels einer Luftzufuhrleitung 20. In dem Behälter 10 befindliches Saatgut wird in einem Luftstrahl durch einen Auslaß 21 in dem Verteiler 18 in den Schlauch 14 gebracht. Der Schlauch 14 bringt das Saatgut mittels eines als Luftabscheiderohr dienenden Rohrs 26 in den Nebenbehälter 12. Der Nebenbehälter 12 gibt das Saatgut an ein Saatgutzumeßgerät 22, das die zugeteilte Saatgutmenge durch ein Särohr 24 in eine Sä- oder Pflanzfurche abgibt.

Es wird darauf hingewiesen, daß, obwohl jeweils nur ein Nebenbehälter 12, ein Schlauch 14, ein Auslaß 21, ein Saatgutzumeßgerät 22, ein Särohr 24 und ein Rohr 26 gezeigt ist, diese Elemente jeweils eine zusammengehörige Gruppe bilden, die in mehrfacher Anordnung vorgesehen sein kann.

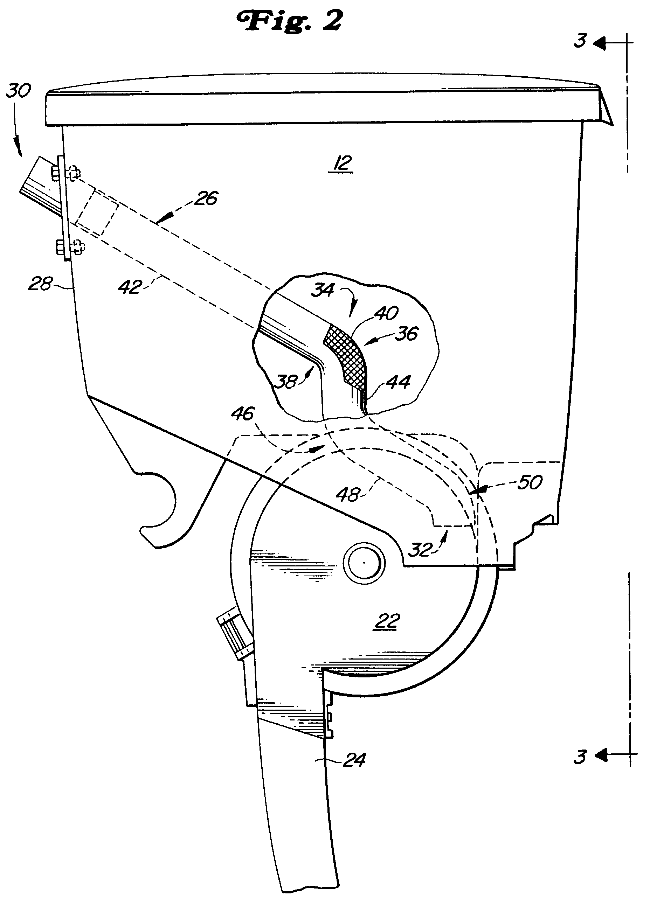

Das Rohr 26 gemäß der vorliegenden Erfindung führt das von dem Schlauch 14 kommende Saatgut in den Nebenbehälter 12. Das Rohr 26 trennt das Saatgut von dem Luftstrom. Wie es am besten in Figur 2 gezeigt ist, enthält das Rohr 26 einen hohlen Rohrteil, der an einer Wand 28 des Nebenbehälters 12 befestigt ist und sich durch diese hindurch erstreckt. Der Anschluß des Rohrteils an den Nebenbehälter 12 kann - was allerdings nicht gezeigt ist - über eine leicht lösbare Kupplung erfolgen. Der Auslaß des Rohrs 26 befindet sich unmittelbar oberhalb eines Saatgutmitnehmers 35 des Saatgutzumeßgeräts 22.

Das Rohr 26 ist mit einem nach unten verlaufenden gekrümmten Bogen 34 versehen, der eine äußere und eine innere Kurvenfläche 36 und 38 enthält. Die äußere Kurvenfläche 36 ist nach dem Luftstrom ausgerichtet, der das Saatgut aus dem Schlauch 14 in das Rohr 26 trägt. Die äußere Kurvenfläche 36 ist mit einem Sieb 40 versehen, durch das der Luftstrom entweichen kann. Allerdings ist das Sieb 40 so bemessen, daß das Saatgut von einem Austritt aus dem Rohr 26 abgehalten wird.

Ein Abschnitt 42 des Rohrs 26 zwischen dem Einlaß an der Wand 28 und dem nach unten verlaufenden Bogen 34 ist nach unten geneigt, so daß ein weiterer Abschnitt 44 des Rohrs 26 unmittelbar unterhalb, d. h. stromabwärts des gekrümmten Bogens 34 vertikal ausgerichtet ist. Zwischen dem nach unten gekrümmten Bogen 34 und einem Auslaß 32 ist ein nach unten geneigter Bogen 46 vorgesehen. Ein letzter Abschnitt 48 des Rohrs 26 zwischen dem nach unten geneigten Bogen 46 und dem Auslaß 32 verläuft ebenfalls schräg nach unten. Der Auslaß 32 ist mit einem nach unten gekrümmten Bogen 50 versehen, so daß er vertikal zu dem Saatgutmitnehmer 35 des Saatgutzugmeßgeräts 22 ausgerichtet ist.

Der hohle Abschnitt 44 stromabwärts des Siebs 40 kann als Saatgutreservoir dienen, um Saatgut dem Saatgutzumeßgerät 22 beim Betrieb auf unebenem Gelände zuzuführen. In Saatguttransportsystemen, die mit Überdruck arbeiten, wie es z. B. in der US-A-5,161,473 offenbart ist, wird Luft in das Saatgutzumeßgerät 22 und in den Behälter und den Nebenbehälter 10, 12 gepumpt, die wärmer ist als die Umgebungsluft. Diese Warmluft verhindert eine Kondensatbildung und somit das Erfordernis, an dem Saatgutzumeßgerät 22 Talk zu benutzen. Das Rohr 26 nach der vorliegenden Erfindung trägt auch zur Verhinderung der Kondensatbildung in dem Saatgutzumeßgerät 22 dadurch bei, daß ein sehr kleiner Saatgutmitnehmer 35 gebildet werden kann, durch den warme Luft leichter hindurchströmen kann. Außerdem ist durch die Anordnung des Siebs 40 auf der äußeren Kurvenfläche 36 des nach unten gekrümmten Bogens 34 das Sieb 40 nie ganz von Saatgut verschlossen, so daß warme Luft in das Saatgutzumeßgerät 22 gelangen kann.

## Patentansprüche

1. Saatgutfördervorrichtung mit einem Rohr (26) zum Führen von Druckluft und von dieser getragenem Saatgut von einem Behälter (10) zu einem Saatgutzumeßgerät (22) und mit einem Sieb (40) zum Trennen des Saatguts von der Druckluft, dadurch gekennzeichnet, daß das Rohr (26) stromaufwärts des Saatgutzumeßgeräts (22) mehrfach gegensinnig gebogen ist, zwischen den Bögen (34, 46, 50) gerade Abschnitte (42, 44, 48) aufweist und das Sieb (40) auf der äußeren Kurvenfläche (36) des stromabwärts zuerst gelegenen Bogens (34) vorgesehen ist.

2. Saatgutfördervorrichtung nach Anspruch 1, dadurch gekennzeichnet, daß sich das Rohr (26) mit seinen Bögen (34, 46, 50), geraden Abschnitten (42, 44, 48) und dem Sieb (40) in einem Nebenbehälter (12) erstreckt.

3. Saatgutfördervorrichtung nach Anspruch 2, dadurch gekennzeichnet, daß eine gedachte Mittenlinie des Rohrs (26) in dem Nebenbehälter (12) unter einem Winkel zwischen 30° und 60° zu der Horizontalen verläuft.

4. Saatgutfördervorrichtung nach einem oder mehreren der vorherigen Ansprüche, dadurch gekennzeichnet, daß das abgabeseitige Ende des Rohrs (26) unmittelbar oberhalb und in vertikaler Flucht zu einem Saatgutmitnehmer (35) des Saatgutzumeßgeräts (22) endet.

5. Saatgutfördervorrichtung nach einem oder mehreren der vorherigen Ansprüche, dadurch gekennzeichnet, daß das Rohr (26) nach einem Eintritt in den Nebenbehälter (12) schräg nach unten bis zu einem das Sieb (40) aufnehmenden Bogen (34) verläuft, sich danach über einen vertikalen, geraden Abschnitt (44) zu einem zweiten entgegengesetzt gerichteten Bogen (46) fortsetzt und nach einem weiteren geraden und nach unten geneigten Abschnitt (48) in einem vertikal auslaufenden Bogen (50) an dem Saatgutzumeßgerät (22) endet.
